# EUROPÄISCHE PATENTSCHRIFT

(11) **EP 4 558 755 B1**
(45) Veröffentlichungstag und Bekanntmachung des Hinweises auf die Patenterteilung: **23.09.2026**
(21) Anmeldenummer: 23747993.6
(22) Anmeldetag: 18.07.2023
(51) Int. Cl.: F17C 13/12

(54) **ANSCHLUSSRAUM UND WASSERSTOFFVERSORGUNGSANORDNUNG**
CONNECTION AREA AND HYDROGEN SUPPLY ARRANGEMENT
CHAMBRE DE RACCORDEMENT ET DISPOSITIF D'ALIMENTATION EN HYDROGÈNE

(30) Priorität: 19.07.2022 EP 22020346
(43) Veröffentlichungstag der Anmeldung: 28.05.2025
(73) Patentinhaber: Linde GmbH, 82049 Pullach (DE)
(72) Erfinder: WELLENHOFER, Anton, 82049 Pullach (DE); ZENZ, Harald, 82049 Pullach (DE); TONEVA, Petya, 82049 Pullach (DE)
(74) Vertreter: Meilinger, Claudia Sabine
(86) Internationale Anmeldenummer: PCT/EP2023/025336
(87) Internationale Veröffentlichungsnummer: WO 2024/017501

(56) Entgegenhaltungen:
- WO-A1-2009/016176
- WO-A1-2020/052730
- WO-A1-2020/182308
- CN-A- 108 364 698
- CN-A- 110 762 383
- CN-A- 113 390 016
- DE-A1- 102012 218 621
- US-A- 5 860 857
- US-A1- 2005 173 929
- US-A1- 2014 331 691

## Beschreibung

Die Erfindung betrifft einen Anschlussraum für eine Wasserstoffversorgungsanordnung und eine Wasserstoffversorgungsanordnung mit einem derartigen Anschlussraum.

Zur Unterdeckinstallation einer Flüssigerdgas-Ausrüstung (Engl.: Liquefied Natural Gas, LNG) zum Betrieb eines Schiffes sind betriebsintern sogenannte Anschlussräume (Engl.: Tank Connections Space, TCS) bekannt. In einem derartigen Anschlussraum sind Komponenten der Flüssigerdgas-Ausrüstung, wie beispielsweise Rohrleitungen, Ventile, Armaturen, Instrumentierungen oder dergleichen, aufgenommen. Der Anschlussraum wird zur Verhinderung einer Anreicherung von LNG im Fall einer Leckage, was zu einem explosionsfähigen LNG-Luft-Gemisch führen könnte, mit Luft durchströmt. Dabei wird die Luftwechselrate so ausgewählt, dass die LNG-Konzentration auch im Falle einer definierten Leckage einer der Komponenten innerhalb des Anschlussraums außerhalb der Explosionsgrenze für LNG bleibt.

Das Dokument DE 10 2012 218621 A1 offenbart eine Sicherheitsvorrichtung für Energieerzeugungsanlagen.

Im Vergleich zu LNG weist Wasserstoff jedoch einen sehr weiten Explosionsbereich auf. Das heißt, dass Wasserstoff und Luft in einem sehr breiten Konzentrationsbereich des Wasserstoffs ein explosionsfähiges Wasserstoff-Luft-Gemisch bilden können. Aus diesem Grund sind bei der Anwendung eines wie zuvor erwähnten Anschlussraums sehr hohe Luftwechselraten erforderlich, die den Anschlussraum im Vergleich zu einer Anwendung bei LNG signifikant vergrößern können. Zusätzlich kann es bei einer Leckage von tiefkaltem Wasserstoff unter Luftatmosphäre zu einer lokalen Kondensation von Luft kommen. Dies kann zu einer lokalen Sauerstoffkonzentration führen, die ein Zünden von Wasserstoff begünstigt. Die Folge ist eine lokale Explosionsgefahr.

Vor diesem Hintergrund besteht eine Aufgabe der vorliegenden Erfindung darin, einen verbesserten Anschlussraum für eine Wasserstoffversorgungsanordnung zur Verfügung zu stellen.

Demgemäß wird ein Anschlussraum für eine Wasserstoffversorgungsanordnung vorgeschlagen. Der Anschlussraum umfasst einen von dem Anschlussraum umschlossenen Innenbereich zum Aufnehmen von Komponenten der Wasserstoffversorgungsanordnung, eine Inertgasversorgungseinrichtung zum Spülen des Innenbereichs mit einem Inertgas und ein Abgassystem zum Abführen des Inertgases von dem Innenbereich. Die Inertgasversorgungseinrichtung ist dabei dazu eingerichtet, dem Anschlussraum das Inertgas kontinuierlich zuzuführen und/oder einen konstanten Inertgasdruck in dem Anschlussraum aufrecht zu erhalten. Das Abgassystem weist einen zumindest teilweise mit einer Flüssigkeit gefüllten Siphon auf.

Dadurch, dass der Innenbereich mit dem Inertgas gespült wird, ist im Falle des Auftretens von Wasserstoff innerhalb des Anschlussraums keine Zündfähigkeit vorhanden. Für den Anschlussraum wird ein minimaler Material- und Platzverbrauch sichergestellt, da die Bildung eines zündfähigen Wasserstoff-Luft-Gemisches nicht zu erwarten ist und somit auf eine explosionsgeschützte Ausrüstung sowie auf Ventilatoren zur Belüftung des Anschlussraums verzichtet werden.

Der Anschlussraum ist insbesondere eine sogenannte Coldbox oder kann als solche bezeichnet werden. Der Begriff "Anschlussraum" kann somit durch den Begriff "Coldbox" und umgekehrt ersetzt werden. Der Anschlussraum kann beispielsweise eine quaderförmige oder würfelförmige Geometrie mit einem Boden, mehreren Seitenwänden und einer Decke aufweisen. Der Anschlussraum kann jedoch auch zylinderförmig ausgebildet sein. Der Anschlussraum schließt den Innenbereich von einer Umgebung des Anschlussraums fluiddicht, insbesondere gasdicht, ab.

Die Komponenten der Wasserstoffversorgungsanordnung können beispielsweise Rohrleitungen, Apparate, Ventile, Instrumentierungen, Armaturen oder dergleichen umfassen. Die Komponenten sind innerhalb des Anschlussraums und damit in dem Innenbereich angeordnet. Die Komponenten oder ein Teil der Komponenten kann über eine oder mehrere Rohrleitungen mit einem Speicherbehälter zum Speichern von Wasserstoff in Fluidverbindung sein. Der Speicherbehälter kann innerhalb oder außerhalb des Anschlussraums angeordnet sein. Der Speicherbehälter kann auch als Wasserstoff-Speicherbehälter bezeichnet werden.

Die Wasserstoffversorgungsanordnung umfasst neben dem Anschlussraum vorzugsweise den zuvor erwähnten Speicherbehälter. Die Wasserstoffversorgungsanordnung ist bevorzugt dazu eingerichtet, einen Verbraucher, insbesondere eine Brennstoffzelle, mit gasförmigem Wasserstoff zu versorgen. Der Verbraucher wird mit gasförmigem Wasserstoff mit einem definierten Versorgungsdruck, einem geeigneten Versorgungsdurchsatz und/oder einer definierten Versorgungstemperatur versorgt. Hierzu kann der Wasserstoff stromaufwärts des Verbrauchers verdampft werden.

Die Inertgasversorgungseinrichtung ist dazu eingerichtet, dem Anschlussraum kontinuierlich das Inertgas, beispielsweise Stickstoff, zuzuführen und/oder einen konstanten Inertgasdruck aufrecht zu erhalten, so dass der gesamte Innenbereich und/oder die Komponenten mit dem Inertgas umgeben und/oder gespült werden. Um einen konstanten Inertgasdruck in dem Anschlussraum oder in dem Innenbereich aufrecht zu erhalten, kann innerhalb des Anschlussraums ein Drucksensor angeordnet sein, der den Inertgasdruck überwacht. Fällt der Inertgasdruck beispielsweise ab, führt die Inertgasversorgungseinrichtung dem Anschlussraum Inertgas zu, um den Inertgasdruck auf einem gleichbleibenden oder konstanten Wert zu halten. Alternativ kann der Anschlussraum kontinuierlich mit dem Inertgas gespült werden. In diesem Fall kann ein konstanter Volumenstrom des Inertgases durch den Anschlussraum strömen. Eine Überwachung des Inertgasdrucks ist dann verzichtbar. Der Begriff "Inertgas" kann durch den Begriff "Stickstoff" und umgekehrt ersetzt werden. Es können jedoch auch andere Gase, beispielsweise Kohlendioxid, als Inertgase eingesetzt werden. Das Inertgas kann auch als Schutzgas bezeichnet werden.

Unter einem "Spülen" des Anschlussraums beziehungsweise des Innenbereichs ist vorliegend zu verstehen, dass ein kontinuierlicher Volumenstrom des Inertgases durch den Innenbereich hindurchgeleitet wird. Dabei möglicherweise austretender Wasserstoff wird zusammen mit dem Inertgas über das Abgassystem von dem Innenbereich abgeführt. Das Abgassystem umfasst vorzugsweise eine Abgasleitung, die aus dem Innenbereich herausmündet. Über die Abgasleitung werden das Inertgas und möglicherweise ausgetretener Wasserstoff abgeleitet.

Das von dem Abgassystem von dem Innenbereich abgeführte "Inertgas" kann ein Gemisch aus dem zugeführten Inertgas und gasförmigem Wasserstoff sein. Das heißt insbesondere, dass der Begriff "Inertgas" nicht ausschließt, dass es sich bei dem abgeführten Inertgas um ein Gemisch des zugeführten Inertgases und gasförmigem Wasserstoff handelt. Das abgeführte Inertgas weist insbesondere jedoch nur dann gasförmigen Wasserstoff auf, wenn in dem Innenbereich eine Leckage herrscht. Demgemäß kann die Formulierung "Abgassystem zum Abführen des Inertgases von dem Innenbereich" durch die Formulierung "Abgassystem zum Abführen des Inertgases und/oder gasförmigem Wasserstoff von dem Innenbereich" ersetzt werden.

Der Anschlussraum kann Teil eines Fahrzeugs sein. Demgemäß wird auch ein Fahrzeug mit zumindest einem derartigen Anschlussraum vorgeschlagen. Das Fahrzeug ist vorzugsweise ein Wasserfahrzeug, insbesondere ein Schiff. Beispielsweise kann das Fahrzeug eine Personenfähre sein. In diesem Fall kann der Anschlussraum in einem Rumpf, insbesondere unterhalb eines Decks, des Fahrzeugs platziert sein. Das Fahrzeug kann auch ein Landfahrzeug, beispielsweise ein Lastkraftwagen, eine Baumaschine, eine Erntemaschine, oder dergleichen sein. Das Fahrzeug kann ferner auch ein Luftfahrzeug sein. Der Anschlussraum kann jedoch auch bei immobilen Anwendungen, beispielsweise in der Gebäudetechnik, eingesetzt werden.

Gemäß einer Ausführungsform mündet das Abgassystem an einem höchsten Punkt des Innenbereichs aus dem Anschlussraum aus.

Wie zuvor erwähnt, kann der Anschlussraum eine Decke aufweisen. Die Decke kann pyramidenförmig oder kegelförmig ausgebildet sein. Alternativ kann die Decke auch eben sein. An einem höchsten Punkt dieser Decke mündet die Abgasleitung des Abgassystems aus dem Anschlussraum aus.

Erfindungsgemäß weist das Abgassystem einen zumindest teilweise mit einer Flüssigkeit gefüllten Siphon auf.

Die Flüssigkeit ist vorzugsweise wasserstoffkompatibel. Die Flüssigkeit kann daher als wasserstoffkompatible Flüssigkeit bezeichnet werden. Beispielsweise kann als geeignete Flüssigkeit ein Silikonöl eingesetzt werden. Die Flüssigkeit dichtet den Siphon ab.

Gemäß einer weiteren Ausführungsform ist der Siphon zumindest teilweise unterhalb eines Bodens des Anschlussraums angeordnet.

Hierdurch wird gewährleistet, dass beispielsweise auch bei starkem Seegang die Funktionalität des Siphons stets aufrechterhalten bleibt. Insbesondere ist ein tiefster Punkt des Siphons entlang einer Schwerkraftrichtung betrachtet unterhalb des Bodens platziert. Der Siphon ist möglichst tief platziert. Der Siphon muss nicht zwingend unterhalb des Bodens angeordnet sein.

Gemäß einer weiteren Ausführungsform weist der Anschlussraum ferner einen Sensor zum Überwachen der in dem Siphon aufgenommenen Flüssigkeit auf.

Der Begriff "aufgenommen" kann vorliegend mit Bezug auf die Flüssigkeit durch den Begriff "vorgelegt" ersetzt werden. Insbesondere ist der Sensor dazu eingerichtet, zu überprüfen, ob genug der Flüssigkeit in dem Siphon aufgenommen ist oder nicht, um den Siphon abzudichten. Der Sensor kann beispielsweise ein optischer Sensor sein. Der Sensor kann insbesondere dazu eingerichtet sein, Flüssigkeitsstände der Flüssigkeit in dem Siphon zu erfassen. Der Sensor ist insbesondere mit einer Steuer- und Regeleinheit des Anschlussraums in Wirkverbindung. Die Wirkverbindung kann drahtlos oder drahtgebunden sein. Beispielsweise kann die Steuer- und Regeleinheit mit Hilfe eines Signalgebers ein Signal ausgeben, sobald nicht mehr genug der Flüssigkeit in dem Siphon aufgenommen ist.

Gemäß einer weiteren Ausführungsform weist das Abgassystem eine Umgehungsleitung auf, die um den Siphon herumgeführt ist, wobei die Umgehungsleitung mit Hilfe einer Berstscheibe verschlossen ist.

Insbesondere verbindet die Umgehungsleitung einen absteigenden Siphonteil des Siphons mit einem aufsteigenden Siphonteil des Siphons oberhalb des Flüssigkeitsstands der Flüssigkeit, wobei die als Verbindungsleitung zwischen den Siphonteilen fungierende Umgehungsleitung mit Hilfe der Berstscheibe verschlossen ist. Die Umgehungsleitung ist eine Bypassleitung und kann daher auch als solche bezeichnet werden. Mit Hilfe der Berstscheibe kann der Siphon geschützt werden. Tritt beispielsweise ein unerwartet hoher Druck in dem Innenbereich auf, so reißt die Berstscheibe, und der Druckabbau innerhalb des Innenbereichs erfolgt direkt durch die Umgehungsleitung und nicht durch den Siphon.

Gemäß einer weiteren Ausführungsform ist der Anschlussraum vollständig oder teilweise von einer Isolierschicht umgeben.

Die Isolierschicht kann den Anschlussraum vollständig oder teilweise umhüllen oder einhüllen. Insbesondere ist zumindest an dem Boden des Anschlussraums eine Isolierschicht angebracht. Auch an der Decke und/oder an einer oder mehreren Seitenwänden des Anschlussraums kann eine derartige Isolierschicht vorgesehen sein. Vorzugsweise ist die Isolierschicht außenseitig an dem Anschlussraum, insbesondere an dem Boden, angebracht. Das heißt insbesondere, dass die Isolierschicht von dem Innenbereich wegweist. Die Isolierschicht kann eine mehrlagige Isolierschicht (Engl.: Multilayer Insulation, MLI) sein. Mit Hilfe der Isolierschicht kann beispielsweise im Fall eines Austretens von flüssigem Wasserstoff verhindert werden, dass ein Bereich des Fahrzeugs, auf dem der Anschlussraum platziert wird, kaltversprödet.

Gemäß einer weiteren Ausführungsform weist der Anschlussraum dem Innenbereich zugewandt eine Edelstahlschicht auf.

Insbesondere weist der Boden dem Innenbereich zugewandt eine Edelstahlschicht auf. Auch an der Decke und/oder an einer oder mehreren Seitenwänden des Anschlussraums kann eine derartige Edelstahlschicht vorgesehen sein. Edelstahl weist eine geringe Anfälligkeit für Kaltversprödung auf. Der Boden kann eine Edelstahlplatte sein oder aufweisen. Der gesamte Anschlussraum kann aus Edelstahl gefertigt sein.

Gemäß einer weiteren Ausführungsform weist die Inertgasversorgungseinrichtung einen Inertgasspeicherbehälter, insbesondere eine Gasflasche, und eine Inertgasversorgungsleitung zum Zuführen des Inertgases von dem Inertgasspeicherbehälter zu dem Anschlussraum auf.

Es können mehrere Inertgasspeicher vorgesehen sein. Insbesondere wenn ein Druckabfall innerhalb des Innenbereichs detektiert wird, kann der Inertgasspeicherbehälter ausgetauscht werden. Die Inertgasversorgungsleitung kann ein Absperrventil aufweisen. Dieses Absperrventil kann in Wirkverbindung mit der zuvor erwähnten Steuer- und Regeleinheit sein.

Gemäß einer weiteren Ausführungsform weist der Anschlussraum ferner einen Sauerstoffsensor, einen Wasserstoffsensor und/oder einen Drucksensor auf, die in dem Innenbereich angeordnet sind.

Vorzugsweise sind der Sauerstoffsensor, der Wasserstoffsensor und/oder der Drucksensor an dem zuvor erwähnten höchsten Punkt des Innenbereichs angeordnet. Diese Sensoren können in Wirkverbindung mit der zuvor erwähnten Steuer- und Regeleinheit sein. Wie zuvor erwähnt, kann der Drucksensor dazu dienen, einen konstanten Inertgasdruck in dem Anschlussraum oder in dem Innenbereich aufrecht zu erhalten.

Gemäß einer weiteren Ausführungsform weist der Anschlussraum eine ebene, pyramidenförmige oder kegelförmige Decke auf.

Wie zuvor erwähnt, kann an einem höchsten Punkt oder höchsten Bereich dieser Decke das Abgassystem angeschlossen sein. Ferner können in oder an diesem höchsten Bereich auch der Sauerstoffsensor, der Wasserstoffsensor und/oder der Drucksensor vorgesehen sein.

Gemäß einer weiteren Ausführungsform herrscht in dem Innenbereich im Vergleich zu einer Umgebung des Anschlussraums ein Überdruck.

Der Überdruck kann beispielsweise 100 mbar betragen. Ob ein Überdruck vorhanden ist oder nicht, kann beispielsweise mit Hilfe des zuvor erwähnten Drucksensors erfasst werden. Sobald der Überdruck in dem Innenbereich im Vergleich zu der Umgebung abfällt, kann es erforderlich sein, den Inertgasspeicherbehälter auszutauschen.

Ferner wird eine Wasserstoffversorgungsanordnung mit einem derartigen Anschlussraum und Komponenten, die in dem Innenbereich aufgenommen sind, vorgeschlagen.

Die Wasserstoffversorgungsanordnung ist insbesondere dazu eingerichtet, einen wie zuvor erwähnten Verbraucher, beispielsweise in Form einer Brennstoffzelle, mit gasförmigem Wasserstoff zu versorgen. Die Komponenten sind die zuvor erwähnten unterschiedlichen Komponenten der Wasserstoffversorgungsanordnung.

Gemäß einer Ausführungsform weist die Wasserstoffversorgungsanordnung ferner einen Speicherbehälter zum Aufnehmen von Wasserstoff auf, wobei der Speicherbehälter mit Hilfe einer Rohrleitung mit den Komponenten verbunden ist.

Der Speicherbehälter ist insbesondere ein Wasserstoff-Speicherbehälter und kann daher auch als solcher bezeichnet werden. Die Rohrleitung kann beispielsweise durch eine Seitenwand des Anschlussraums von der Umgebung in den Innenbereich geführt werden. In diesem Fall ist der Speicherbehälter außerhalb des Anschlussraums in der Umgebung platziert.

Gemäß einer weiteren Ausführungsform ist der Speicherbehälter in dem Innenbereich angeordnet.

Hierdurch kann auch ein Schutz vor einer Leckage des Speicherbehälters selbst erzielt werden. Wie zuvor erwähnt, kann der Speicherbehälter auch außerhalb des Innenbereichs und damit außerhalb des Anschlussraums angeordnet sein. In diesem letztgenannten Fall ist die den Speicherbehälter mit den Komponenten verbindende Rohrleitung durch den Anschlussraum, insbesondere durch eine der Seitenwände des Anschlussraums, hindurchgeführt.

Die für den Anschlussraum erläuterten Ausführungsformen und Erläuterungen gelten für die Wasserstoffversorgungsanordnung entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl an Elementen gegeben ist. Vielmehr sind zahlenmäßige Abweichungen nach oben und nach unten möglich, soweit nichts Gegenteiliges angegeben ist.

Weitere mögliche Implementierungen des Anschlussraums und/oder der Wasserstoffversorgungsanordnung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Anschlussraums und/oder der Wasserstoffversorgungsanordnung hinzufügen.

Weitere vorteilhafte Ausgestaltungen und Aspekte des Anschlussraums und/oder der Wasserstoffversorgungsanordnung sind Gegenstand der Unteransprüche sowie der im Folgenden beschriebenen Ausführungsbeispiele des Anschlussraums und/oder der Wasserstoffversorgungsanordnung. Im Weiteren werden der Anschlussraums und/oder die Wasserstoffversorgungsanordnung anhand von bevorzugten Ausführungsformen unter Bezugnahme auf die beigelegten Figuren näher erläutert.
Fig. 1 zeigt eine schematische Ansicht einer Ausführungsform eines Fahrzeugs;
Fig. 2 zeigt eine schematische Ansicht einer Ausführungsform eines Anschlussraums für das Fahrzeug gemäß Fig. 1;
Fig. 3 zeigt die Detailansicht III gemäß Fig. 2;
Fig. 4 zeigt eine schematische Ansicht einer weiteren Ausführungsform eines Anschlussraums für das Fahrzeug gemäß Fig. 1; und

In den Figuren sind gleiche oder funktionsgleiche Elemente mit denselben Bezugszeichen versehen worden, sofern nichts anderes angegeben ist.

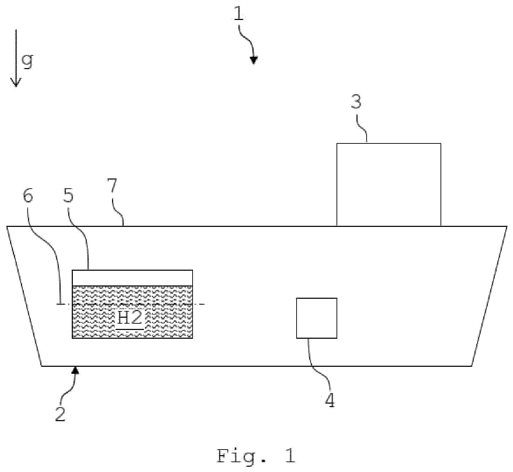

Die Fig. 1 zeigt eine stark vereinfachte schematische Ansicht einer Ausführungsform eines Fahrzeugs 1.

Das Fahrzeug 1 kann beispielsweise ein maritimes Wasserfahrzeug, insbesondere ein Schiff, sein. Das Fahrzeug 1 kann als maritimes Fahrzeug bezeichnet werden. Insbesondere kann das Fahrzeug 1 eine maritime Personenfähre sein. Alternativ kann das Fahrzeug 1 auch ein Landfahrzeug sein. Nachfolgend wird jedoch davon ausgegangen, dass das Fahrzeug 1 ein Wasserfahrzeug ist.

Das Fahrzeug 1 umfasst einen Rumpf 2, der schwimmfähig ist. An oder auf dem Rumpf 2 ist eine Brücke 3 vorgesehen. Das Fahrzeug 1 wird vorzugsweise mit Wasserstoff betrieben. Hierzu kann das Fahrzeug 1 eine Brennstoffzelle 4 aufweisen.

Unter einer "Brennstoffzelle" ist vorliegend eine galvanische Zelle zu verstehen, welche die chemische Reaktionsenergie eines kontinuierlich zugeführten Brennstoffs, vorliegend Wasserstoff, und eines Oxidationsmittels, vorliegend Sauerstoff, in elektrische Energie wandelt. Mit Hilfe der erhaltenen elektrischen Energie kann beispielsweise ein nicht gezeigter Elektromotor angetrieben werden, der wiederum eine Schiffsschraube zum Antreiben des Fahrzeugs 1 antreibt.

Zum Versorgen der Brennstoffzelle 4 mit Wasserstoff ist ein Speicherbehälter 5 zum Speichern von flüssigem Wasserstoff H2 vorgesehen. Der Speicherbehälter 5 ist rotationssymmetrisch zu einer Mittel- oder Symmetrieachse 6 aufgebaut. Der Speicherbehälter 5 kann beispielsweise innerhalb des Rumpfs 2, insbesondere innerhalb eines Maschinenraums, angeordnet sein. Der Speicherbehälter 5 ist unter einem Deck 7 des Rumpfs 2 angeordnet. Dabei ist die Symmetrieachse 6 senkrecht zu einer Schwerkraftrichtung g orientiert. Das heißt, der Speicherbehälter 5 ist liegend oder horizontal positioniert. Somit ist die Symmetrieachse 6 parallel zu dem Deck 7 platziert. Der Speicherbehälter 5 kann jedoch auch stehend oder vertikal angeordnet sein. In diesem Fall ist die Symmetrieachse 6 parallel zu der Schwerkraftrichtung g orientiert.

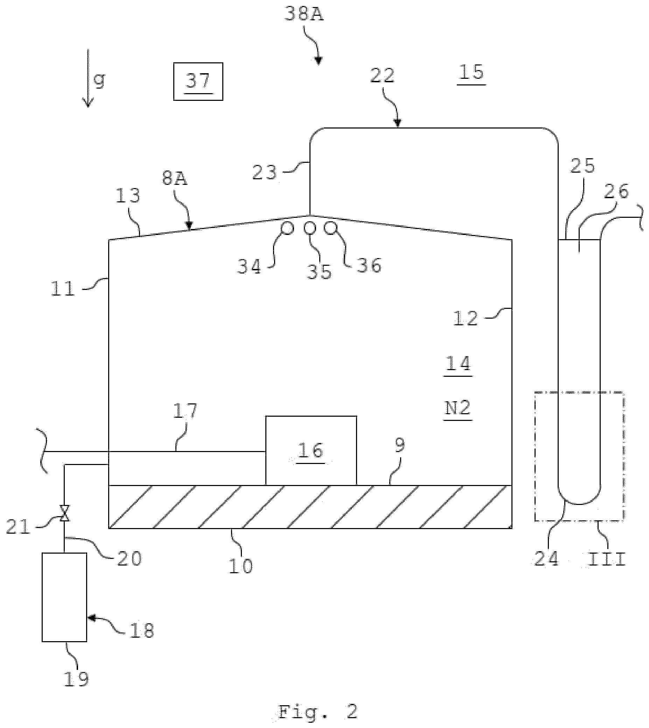

Die Fig. 2 zeigt eine schematische Ansicht einer Ausführungsform eines Anschlussraums 8A (Engl.: Tank Connection Space, TCS) für das Fahrzeug 1.

Der Anschlussraum 8A ist eine sogenannte Coldbox und kann daher auch als solche bezeichnet werden. Der Anschlussraum 8A kann in dem Rumpf 2 unterhalb des Decks 7 platziert sein. Der Speicherbehälter 5 ist außerhalb des Anschlussraums 8A angeordnet. Der Speicherbehälter 5 kann jedoch auch innerhalb des Anschlussraums 8A angeordnet sein. Nachfolgend wird jedoch davon ausgegangen, dass der Speicherbehälter 5 außerhalb des Anschlussraums 8A platziert ist.

Der Anschlussraum 8A ist vorzugsweise fluiddicht, insbesondere gasdicht. Der Anschlussraum 8A weist einen Boden 9 auf. Der Boden 9 ist vorzugsweise aus einer Edelstahllegierung gefertigt. Anstelle einer Edelstahllegierung sind auch alternative Materialien, die eine Tieftemperaturbeständigkeit aufweisen, einsetzbar. In der Orientierung der Fig. 2 unterhalb des Bodens 9 ist eine Dämmschicht oder Isolierschicht 10 vorgesehen. Die Isolierschicht 10 kann mehrlagig sein. Beispielsweise kann die Isolierschicht 10 eine mehrlagige Isolierschicht sein (Engl.: Multilayer Insulation, MLI). Die Isolierschicht 10 kann auch Perlit oder dergleichen aufweisen. Die Isolierschicht 10 steht in Kontakt mit einer Oberfläche des Rumpfs 2.

Der Anschlussraum 8A kann würfelförmig oder quaderförmig sein und neben dem Boden 9 vier Seitenwände 11, 12 aufweisen, die auch gedämmt oder isoliert sein können. Der Anschlussraum 8A kann davon abweichend jedoch auch zylinderförmig oder dergleichen sein. In der Orientierung der Fig. 2 nach oben hin ist der Anschlussraum 8A von einer Decke 13 abgeschlossen, die ebenfalls gedämmt oder isoliert sein kann. Die Decke 13 kann dachförmig sein. Insbesondere kann die Decke 13 pyramidenförmig oder kegelförmig sein.

Der Anschlussraum 8A umschließt einen Innenbereich 14, der mit einem Inertgas N2, insbesondere mit Stickstoff, gespült wird. Der Anschlussraum 8A grenzt den Innenbereich 14 von einer Umgebung 15 des Anschlussraums 8A fluiddicht ab. In dem Innenbereich 14 herrscht gegenüber der Umgebung 15 ein Überdruck. Der Überdruck kann beispielsweise 100 mbar betragen.

Wie zuvor erwähnt, befindet sich der Speicherbehälter 5 (nicht gezeigt) außerhalb des Anschlussraums 8A. In dem Innenbereich 14 des Anschlussraums 8A sind jedoch beliebige Komponenten 16, die dem Speicherbehälter 5 zugeordnet sind, aufgenommen. Die Komponenten 16 können beispielsweise Rohrleitungen, verfahrenstechnische Apparate, Ventile, Instrumentierungen oder dergleichen umfassen. Der Speicherbehälter 5 kann über eine Rohrleitung 17 mit den Komponenten 16 in Fluidverbindung sein. Die Rohrleitung 17 des Speicherbehälters 5 kann von der Umgebung 15 durch den Anschlussraum 8A hindurch in den Innenbereich 14 geführt sein. Beispielsweise ist die Rohrleitung 17 durch eine der Seitenwände 11, 12 hindurchgeführt.

Dem Anschlussraum 8A ist eine Inertgasversorgungseinrichtung 18 zugeordnet. Mit Hilfe der Inertgasversorgungseinrichtung 18 kann der Innenbereich 14 mit dem Inertgas N2 geflutet und gespült werden. Die Inertgasversorgungseinrichtung 18 umfasst einen Inertgasspeicherbehälter 19, beispielsweise eine Gasflasche, eine Inertgasversorgungsleitung 20 die von dem Inertgasspeicherbehälter 19 zu dem Anschlussraum 8A führt, und ein Absperrventil 21, mit dessen Hilfe die Inertgasversorgungsleitung 20 abgesperrt und geöffnet werden kann. Die Inertgasversorgungsleitung 20 kann beispielsweise durch eine der Seitenwände 11, 12 hindurchgeführt sein und weitere Armaturen, beispielsweise Regelventile, aufweisen.

Zum Abführen des Inertgases N2 ist ein Abgassystem 22 vorgesehen. Das Abgassystem 22 weist eine Abgasleitung 23 auf, die an einem höchsten Punkt des Anschlussraums 8A, insbesondere an der Decke 13, aus dem Anschlussraum 8A ausmündet. Die Abgasleitung 23 führt zu einem Siphon 24, dessen niedrigster Punkt entlang der Schwerkraftrichtung g betrachtet bevorzugt unterhalb des Bodens 9 platziert ist. Um den Siphon 24 herum führt eine Umgehungsleitung 25 mit einer Berstscheibe 26. Die Abgasleitung 23, der Siphon 24 und/oder die Umgehungsleitung 25 können doppelwandig oder einwandig sein.

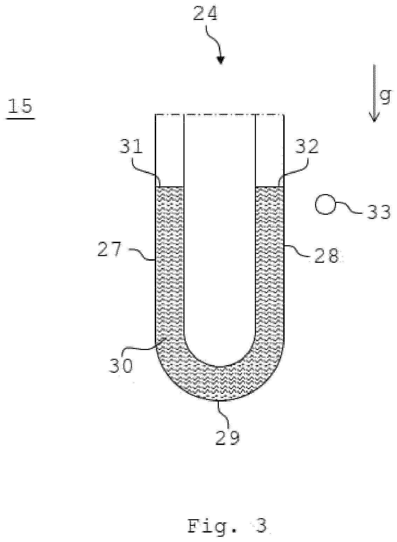

Die Fig. 3 zeigt die Detailansicht III gemäß der Fig. 2.

Der Siphon 24 ist entlang der Schwerkraftrichtung g betrachtet tief genug ausgeführt, dass ein Abschluss des Siphons 24 zur Umgebung 15 hin auch bei starkem Seegang stets gewährleistet wird. Der Siphon 24 wird dadurch gebildet, dass die Abgasleitung 23 schlaufenförmig oder schleifenförmig gebogen oder angeordnet wird. Der Siphon 24 umfasst zwei parallel zu der Schwerkraftrichtung g verlaufende Abschnitte 27, 28 und einen gekrümmten Abschnitt 29, der die beiden Abschnitte 27, 28 miteinander verbindet.

In dem Siphon 24 ist eine wasserstoffkompatible Flüssigkeit 30 aufgenommen, die den Siphon 24 verschließt. Die Flüssigkeit 30 kann ein Silikonöl oder dergleichen sein. In den Abschnitten 27, 28 steht die Flüssigkeit 30 mit Flüssigkeitsständen 31, 32. Dem Siphon 24 kann ein Sensor 33 zugeordnet sein. Mit Hilfe des Sensors 33 ist ein Monitoring der Flüssigkeit 30 beziehungsweise der Flüssigkeitsstände 31, 32 möglich. Das heißt, dass der Sensor 33 beispielsweise überwachen kann, ob ausreichend der Flüssigkeit 30 vorhanden ist, um den Siphon 24 zu verschließen oder nicht. Ferner kann der Sensor 33 geeignet sein, die Flüssigkeitsstände 31, 32 zu überwachen. Der Sensor 33 fungiert somit zur Funktionsüberwachung des Siphons 24.

Nun zurückkehrend zu der Fig. 2 können an einem entlang der Schwerkraftrichtung g betrachtet höchsten Punkt des Anschlussraums 8A, an dem auch die Abgasleitung 23 angeschlossen ist, ein Sauerstoffsensor 34, ein Wasserstoffsensor 35 und/oder ein Drucksensor 36 vorgesehen sein. Die Sensoren 34, 35, 36 sind innerhalb des Anschlussraums 8A, also in dem Innenbereich 14, platziert.

Die Sensoren 33, 34, 35, 36 sind mit einer Steuer- und Regeleinheit 37 des Anschlussraums 8A wirkverbunden. Die Wirkverbindung kann drahtlos oder drahtgebunden sein. Die Steuer- und Regeleinheit 37 ist auch geeignet, das Absperrventil 21 und/oder die Komponenten 16 anzusteuern. Beispielsweise kann die Steuer- und Regeleinheit 37 geeignet sein, das Absperrventil 21 zu öffnen und zu schließen.

Der Anschlussraum 8A, der Speicherbehälter 5, die Rohrleitung 17 und die Komponenten 16 können Teil einer Wasserstoffversorgungsanordnung 38A zum Versorgen der Brennstoffzelle 4 mit Wasserstoff H2 sein. Im Betrieb der Wasserstoffversorgungsanordnung 38A wird der Anschlussraum 8A mit dem Inertgas N2 gespült. Dabei werden mit Hilfe der Sensoren 34, 35, 36 der Sauerstoffgehalt, der Wasserstoffgehalt und der Druck innerhalb des Innenbereichs 14 überwacht. Der Sensor 33 überwacht den Siphon 24. Im Falle eines ungewollten Druckanstiegs innerhalb des Innenbereichs 14 reißt oder bricht die Berstscheibe 26 und das Inertgas N2 wird an dem Siphon 24 vorbei durch die Umgehungsleitung 25 geleitet.

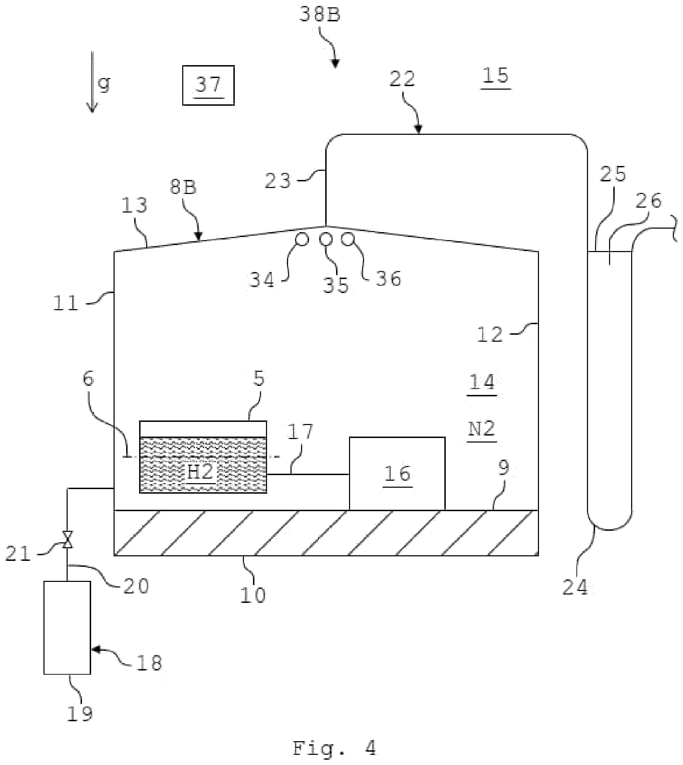

Die Fig. 4 zeigt eine schematische Ansicht einer weiteren Ausführungsform eines Anschlussraums 8B.

Der Anschlussraum 8B ist Teil einer wie zuvor erwähnten Wasserstoffversorgungsanordnung 38B. Der Anschlussraum 8B unterscheidet sich von dem Anschlussraum 8A nur dadurch, dass der Speicherbehälter 5 nicht außerhalb, sondern innerhalb des Anschlussraums 8B angeordnet ist. Die Funktionalität der Anschlussräume 8A, 8B beziehungsweise der Wasserstoffversorgungsanordnungen 38A, 38B unterscheidet sich nicht voneinander.

Im Vergleich zu Flüssigerdgas (Engl: Liquefied Natural Gas, LNG) weist Wasserstoff H2 einen weiten Explosionsbereich auf. Im Betrieb mit LNG ist es im Gegensatz zu Wasserstoff H2 möglich, mit einer bestimmten Luftwechselrate, die sicherstellt, dass im Fall einer Leckage eines nicht gezeigten LNG-Anschlussraums die LNG-Konzentration außerhalb der Explosionsgrenze für LNG bleibt, zu arbeiten. Die Belüftung erfolgt kann beispielsweise mit Hilfe von Ventilatoren mit mindestens 30 Luftwechselzyklen pro Stunde erfolgen.

Der Einsatz einer derartigen Anordnung zur Verwendung mit Wasserstoff H2 weist jedoch einige Nachteile auf. Zum einen sind Explosionsanalysen, insbesondere dynamische Simulationen, zur Ausbreitung des mit Luft entstehenden explosiven Gemisches durchzuführen. Dabei sind viele Annahmen zu treffen, die den realen Zustand im System nicht genau wiedergeben. Ferner wird durch die benötigten hohen Luftwechselraten im Fall von Wasserstoff H2 der LNG-Anschlussraum sehr groß. Weiterhin kann eine lokale Kondensation von Luft auftreten, die zu einer lokalen Wasserstoff-Konzentration, die oberhalb der Zündgrenze des Wasserstoff-Luft-Gemisches ist, führen kann. Die Folge ist eine lokale Explosionsgefahr.

Mit Hilfe des zuvor erläuterten Anschlussraums 8A, 8B können diese zuvor erwähnten Nachteile verhindert oder zumindest reduziert werden. Der Anschlussraum 8A, 8B ermöglicht einen Wasserstoffbetrieb in einem geschlossenen Raum unter Berücksichtigung der Besonderheiten einer maritimen Anwendung, wie beispielsweise sogenannte Sloshing-Effekte, und unter Sicherstellung einer inerten Atmosphäre, insbesondere mit einem Sauerstoffgehalt von unter 5 Volumenprozent, in dem abgeschlossenen Anschlussraum 8A, 8B.

Die Vorteile des Betriebs in der inerten Umgebung innerhalb des Anschlussraums 8A, 8B liegen darin, dass zum einen keine Explosionen berücksichtigt werden müssen. Zum anderen muss keine Zündzone gemäß ATEX (Franz.: Appareils destinés à être utilisés en Atmosphères Explosibles) betrachtet werden, da keine Zündfähigkeit vorhanden ist. Es wird ein minimaler Material- und Platzverbrauch sichergestellt, da keine Explosionsgefahr zu berücksichtigen ist. Auf eine explosionsgeschützte Ausrüstung und auf Ventilatoren kann verzichtet werden. Dies hat eine Kostenreduktion zur Folge. Die thermische Isolierung des Anschlussraums 8A, 8B mit Hilfe der Isolierschicht 10 sorgt für einen Schutz vor Kaltversprödung bei einem eventuellen Austritt von flüssigem Wasserstoff H2.

Vorteilhafterweise kann so ein präventiver Explosionsschutz in dem geschlossenen Anschlussraum 8A, 8B verwirklicht werden. Wie zuvor erwähnt, ist der Siphon 24 tief genug ausgeführt, dass ein Abschluss des Siphons 24 zu der Umgebung 15 auch bei starkem Seegang gewährleistet wird. Die Berstscheibe 26 fungiert als finales Element um den Siphon 24 im Notfall zu umgehen. Es ist mit Hilfe des Sensors 33 vorteilhafterweise ein Monitoring der Flüssigkeit 30 möglich.

Optional kann die Abgasleitung 23 doppelwandig, insbesondere in Form einer Rohr-in-Rohr-Konstruktion, ausgeführt werden. Optional ist zusätzlich eine Leckagedetektion durch Kaltstromdetektion zusätzlich zur Wasserstoffdetektion und zur Druckdetektion möglich. Der Boden 9, die Seitenwände 11, 12 und die Decke 13 sind isoliert oder gedämmt, wobei am Boden 9 die Isolierschicht 10 zur zusätzlichen Isolierung oder Dämmung vorgesehen ist. Die Wärmeisolierung oder Wärmedämmung ist also am Boden 9 verbessert. Zumindest eine oberste Materialschicht des Bodens 9 ist aus Edelstahl gefertigt. Hierdurch kann eine Kaltversprödung verhindert werden. Warme Gasleitungen, beispielsweise als Teil der Komponenten 16, können einwandig ausgeführt werden.

Der Anschlussraum 8A, 8B kann somit als dichte Coldbox, insbesondere einschließlich Speicherbehälter 5 und thermischer Isolierung des Anschlussraums 8A, 8B gegen das Fahrzeug 1, zum Schutz vor Kaltversprödung bei niedrigem Spülstrom, einem Überwachungskonzept und einer besonderen Ausführung des Siphons 24 inklusive Siphonschutz mit Hilfe der Berstscheibe 26 fungieren.

Die Vorteile des Betriebs unter dem Inertgas N2 liegen darin, dass keine Explosionen berücksichtigt werden müssen und dass keine Zündzone gemäß ATEX betrachtet werden muss, da keine Zündfähigkeit vorhanden ist. Ferner wird ein minimaler Material- und Platzverbrauch sichergestellt, da keine mögliche Explosion berücksichtigt werden muss. Es ist keine explosionsgeschützte Ausrüstung erforderlich und Ventilatoren zur Belüftung des Anschlussraums 8A, 8B entfallen.

Der Anschlussraum 8A, 8B ist auch für andere explosive Medien als Wasserstoff H2 im maritimen Bereich einsetzbar. Jegliche Verrohrung kann komplett doppelwandig ausgeführt werden. Optional können warme Gasleitungen einwandig ausgeführt werden. Das Abgassystem 22 ist doppelwandig oder einwandig. Optional kann eine Kaltstromdetektion durchgeführt werden. Für die Flüssigkeit 30 können unterschiedliche Medien zur Siphonabdichtung, wie beispielsweise Silikonöl, Freezium oder dergleichen, eingesetzt werden.

### Verwendete Bezugszeichen

- 1: Fahrzeug
- 2: Rumpf
- 3: Brücke
- 4: Brennstoffzelle
- 5: Speicherbehälter
- 6: Symmetrieachse
- 7: Deck
- 8A: Anschlussraum
- 8B: Anschlussraum
- 9: Boden
- 10: Isolierschicht
- 11: Seitenwand
- 12: Seitenwand
- 13: Decke
- 14: Innenbereich
- 15: Umgebung
- 16: Komponente
- 17: Rohrleitung
- 18: Inertgasversorgungseinrichtung
- 19: Inertgasspeicherbehälter
- 20: Inertgasversorgungsleitung
- 21: Absperrventil
- 22: Abgassystem
- 23: Abgasleitung
- 24: Siphon
- 25: Umgehungsleitung
- 26: Berstscheibe
- 27: Abschnitt
- 28: Abschnitt
- 29: Abschnitt
- 30: Flüssigkeit
- 31: Flüssigkeitsstand
- 32: Flüssigkeitsstand
- 33: Sensor
- 34: Sensor/Sauerstoffsensor
- 35: Sensor/Wasserstoffsensor
- 36: Sensor/Drucksensor
- 37: Steuer- und Regeleinheit
- 38A: Wasserstoffversorgungsanordnung
- 38B: Wasserstoffversorgungsanordnung

- g: Schwerkraftrichtung
- H2: Wasserstoff
- N2: Inertgas/Stickstoff

## Patentansprüche

1. Anschlussraum (8A, 8B) für eine Wasserstoffversorgungsanordnung (38A, 38B), mit einem von dem Anschlussraum (8A, 8B) umschlossenen Innenbereich (14) zum Aufnehmen von Komponenten (16) der Wasserstoffversorgungsanordnung (38A, 38B), einer Inertgasversorgungseinrichtung (18) zum Spülen des Innenbereichs (14) mit einem Inertgas (N2), und einem Abgassystem (22) zum Abführen des Inertgases (N2) von dem Innenbereich (14), wobei die Inertgasversorgungseinrichtung (18) dazu eingerichtet ist, dem Anschlussraum (8A, 8B) das Inertgas (N2) kontinuierlich zuzuführen und/oder einen konstanten Inertgasdruck in dem Anschlussraum (8A, 8B) aufrecht zu erhalten, wobei das Abgassystem (22) einen zumindest teilweise mit einer Flüssigkeit (30) gefüllten Siphon (24) aufweist.

2. Anschlussraum nach Anspruch 1, wobei das Abgassystem (22) an einem höchsten Punkt des Innenbereichs (14) aus dem Anschlussraum (8A, 8B) ausmündet.

3. Anschlussraum nach Anspruch 1 oder 2, wobei der Siphon (24) zumindest teilweise unterhalb eines Bodens (9) des Anschlussraums (8A, 8B) angeordnet ist.

4. Anschlussraum nach einem der Ansprüche 1 - 4, ferner aufweisend einen Sensor (33) zum Überwachen der in dem Siphon (24) aufgenommenen Flüssigkeit (30).

5. Anschlussraum nach einem der Ansprüche 1 - 4, wobei das Abgassystem (22) eine Umgehungsleitung (25) aufweist, die um den Siphon (24) herumgeführt ist, und wobei die Umgehungsleitung (25) mit Hilfe einer Berstscheibe (26) verschlossen ist.

6. Anschlussraum nach einem der Ansprüche 1 - 6, wobei der Anschlussraum (8A, 8B) vollständig oder teilweise von einer Isolierschicht (10) umgeben ist.

7. Anschlussraum nach einem der Ansprüche 1 - 7, wobei der Anschlussraum (8A, 8B) dem Innenbereich (14) zugewandt eine Edelstahlschicht aufweist.

8. Anschlussraum nach einem der Ansprüche 1 - 7, wobei die Inertgasversorgungseinrichtung (18) einen Inertgasspeicherbehälter (19), insbesondere eine Gasflasche, und eine Inertgasversorgungsleitung (20) zum Zuführen des Inertgases (N2) von dem Inertgasspeicherbehälter (19) zu dem Anschlussraum (8A, 8B) aufweist.

9. Anschlussraum nach einem der Ansprüche 1 - 8, ferner aufweisend einen Sauerstoffsensor (34), einen Wasserstoffsensor (35) und/oder einen Drucksensor (36), die in dem Innenbereich (14) angeordnet sind.

10. Anschlussraum nach einem der Ansprüche 1 - 9, wobei der Anschlussraum (8A, 8B) eine ebene, pyramidenförmige oder kegelförmige Decke (13) aufweist.

11. Anschlussraum nach einem der Ansprüche 1 - 10, wobei in dem Innenbereich (14) im Vergleich zu einer Umgebung (15) des Anschlussraums (8A, 8B) ein Überdruck herrscht.

12. Wasserstoffversorgungsanordnung (38A, 38B) mit einem Anschlussraum (8A, 8B) nach einem der Ansprüche 1 - 11 und Komponenten (16), die in dem Innenbereich (14) aufgenommen sind.

13. Wasserstoffversorgungsanordnung nach Anspruch 12, ferner aufweisend einen Speicherbehälter (5) zum Aufnehmen von Wasserstoff (H2), wobei der Speicherbehälter (5) mit Hilfe einer Rohrleitung (17) mit den Komponenten (16) verbunden ist.

14. Wasserstoffversorgungsanordnung nach Anspruch 13, wobei der Speicherbehälter (5) in dem Innenbereich (14) angeordnet ist.

## Claims

1. A connection space (8A, 8B) for a hydrogen supply arrangement (38A, 38B), comprising an inner region (14) surrounded by the connection space (8A, 8B) for receiving components (16) of the hydrogen supply arrangement (38A, 38B), an inert gas supply device (18) for flushing the inner region (14) with an inert gas (N2), and an exhaust gas system (22) for discharging the inert gas (N2) from the inner region (14), wherein the inert gas supply device (18) is designed to continuously supply the inert gas (N2) to the connection space (8A, 8B) and/or to maintain a constant inert gas pressure in the connection space (8A, 8B), wherein the exhaust gas system (22) has a siphon (24) which is at least partially filled with a liquid (30).

2. The connection space according to claim 1, wherein the exhaust gas system (22) opens out of the connection space (8A, 8B) at a highest point of the inner region (14).

3. The connection space according to claim 1 or 2, wherein the siphon (24) is arranged at least partially below a floor (9) of the connection space (8A, 8B).

4. The connection space according to any of claims 1 - 4, further comprising a sensor (33) for monitoring the liquid (30) collected in the siphon (24).

5. The connection space according to any of claims 1 - 4, wherein the exhaust gas system (22) has a bypass line (25) which is guided around the siphon (24), and wherein the bypass line (25) is sealed by means of a rupture disk (26).

6. The connection space according to any of claims 1 - 6, wherein the connection space (8A, 8B) is completely or partially surrounded by an insulating layer (10).

7. The connection space according to any of claims 1 - 7, wherein the connection space (8A, 8B) has a stainless steel layer facing the inner region (14).

8. The connection space according to any of claims 1 - 7, wherein the inert gas supply device (18) has an inert gas storage vessel (19), in particular a gas cylinder, and an inert gas supply line (20) for supplying the inert gas (N2) from the inert gas storage vessel (19) to the connection space (8A, 8B).

9. The connection space according to any of claims 1 - 8, further comprising an oxygen sensor (34), a hydrogen sensor (35) and/or a pressure sensor (36), which are arranged in the inner region (14).

10. The connection space according to any of claims 1 - 9, wherein the connection space (8A, 8B) has a flat, pyramid-shaped or conical ceiling (13).

11. The connection space according to any of claims 1 - 10, wherein there is an overpressure in the inner region (14) compared to an environment (15) of the connection space (8A, 8B).

12. A hydrogen supply arrangement (38A, 38B) comprising a connection space (8A, 8B) according to any of claims 1 - 11 and components (16) received in the inner region (14).

13. The hydrogen supply arrangement according to claim 12, further comprising a storage vessel (5) for receiving hydrogen (H2), wherein the storage vessel (5) is connected to the components (16) by means of a pipeline (17).

14. The hydrogen supply arrangement according to claim 13, wherein the storage vessel (5) is arranged in the inner region (14).

## Revendications

1. Espace de raccordement (8A, 8B) pour un agencement d'alimentation en hydrogène (38A, 38B), comportant une zone intérieure (14) entourée par l'espace de raccordement (8A, 8B) et permettant la réception de composants (16) de l'agencement d'alimentation en hydrogène (38A, 38B), un dispositif d'alimentation en gaz inerte (18) permettant le rinçage de la zone intérieure (14) avec un gaz inerte (N2), et un système d'échappement (22) permettant l'évacuation du gaz inerte (N2) de la zone intérieure (14), dans lequel le dispositif d'alimentation en gaz inerte (18) est configuré pour alimenter en continu l'espace de raccordement (8A, 8B) en gaz inerte (N2) et/ou pour maintenir une pression de gaz inerte constante dans l'espace de raccordement (8A, 8B), dans lequel le système d'échappement (22) présente un siphon (24) rempli au moins partiellement d'un liquide (30).

2. Espace de raccordement selon la revendication 1, dans lequel le système d'échappement (22) débouche hors de l'espace de raccordement (8A, 8B) au niveau d'un point le plus élevé de la zone intérieure (14).

3. Espace de raccordement selon la revendication 1 ou 2, dans lequel le siphon (24) est disposé au moins partiellement sous un fond (9) de l'espace de raccordement (8A, 8B).

4. Espace de raccordement selon l'une des revendications 1 à 4, présentant en outre un capteur (33) permettant de surveiller le liquide (30) reçu dans le siphon (24).

5. Espace de raccordement selon l'une des revendications 1 à 4, dans lequel le système d'échappement (22) présente une conduite de contournement (25) qui contourne le siphon (24), et dans lequel la conduite de contournement (25) est obturée à l'aide d'un disque de rupture (26).

6. Espace de raccordement selon l'une des revendications 1 à 6, dans lequel l'espace de raccordement (8A, 8B) est entièrement ou partiellement encerclé d'une couche isolante (10).

7. Espace de raccordement selon l'une des revendications 1 à 7, dans lequel l'espace de raccordement (8A, 8B) présente une couche d'acier inoxydable tournée vers la zone intérieure (14).

8. Espace de raccordement selon l'une des revendications 1 à 7, dans lequel le dispositif d'alimentation en gaz inerte (18) présente un réservoir de stockage de gaz inerte (19), en particulier une bouteille de gaz, et une conduite d'alimentation en gaz inerte (20) permettant l'alimentation en gaz inerte (N2), du réservoir de stockage de gaz inerte (19) vers l'espace de raccordement (8A, 8B).

9. Espace de raccordement selon l'une des revendications 1 à 8, présentant en outre un capteur d'oxygène (34), un capteur d'hydrogène (35) et/ou un capteur de pression (36), lesquels sont disposés dans la zone intérieure (14).

10. Espace de raccordement selon l'une des revendications 1 à 9, dans lequel l'espace de raccordement (8A, 8B) présente un plafond (13) plan, pyramidal ou conique.

11. Espace de raccordement selon l'une des revendications 1 à 10, dans lequel une surpression règne dans la zone intérieure (14) par rapport à l'environnement (15) de l'espace de raccordement (8A, 8B).

12. Agencement d'alimentation en hydrogène (38A, 38B) comportant un espace de raccordement (8A, 8B) selon l'une des revendications 1 à 11 et des composants (16) reçus dans la zone intérieure (14).

13. Agencement d'alimentation en hydrogène selon la revendication 12, présentant en outre un réservoir de stockage (5) permettant la réception d'hydrogène (H2), dans lequel le réservoir de stockage (5) est raccordé aux composants (16) au moyen d'une canalisation (17).

14. Agencement d'alimentation en hydrogène selon la revendication 13, dans lequel le réservoir de stockage (5) est disposé dans la zone intérieure (14).
